(19) Europäisches Patentamt
European Patent Office
Office européen des brevets

(11) **EP 0 611 891 B1**

(12) **EUROPÄISCHE PATENTSCHRIFT**

(45) Veröffentlichungstag und Bekanntmachung des Hinweises auf die Patenterteilung:
**07.05.1997   Patentblatt 1997/19**

(51) Int Cl.⁶: **F16B 13/14**, C08L 63/10

(21) Anmeldenummer: **94100420.2**

(22) Anmeldetag: **13.01.1994**

(54) **Verankerungspatrone**

Anchoring cartridge

Cartouche d'ancrage

(84) Benannte Vertragsstaaten:
**AT BE CH DE DK ES FR GB GR IE IT LI LU NL PT**

(30) Priorität: **16.02.1993   DE 4304620**

(43) Veröffentlichungstag der Anmeldung:
**24.08.1994   Patentblatt 1994/34**

(73) Patentinhaber: **fischerwerke Artur Fischer GmbH & Co. KG
D-72178 Waldachtal (DE)**

(72) Erfinder:
• **Arnold, Norbert, Dr.
  D-72178 Waldachtal (DE)**
• **Haug, Willi
  D-72250 Freudenstadt (DE)**

(56) Entgegenhaltungen:
DE-A- 3 247 227         DE-A- 3 411 253
DE-A- 3 638 750         DE-A- 3 940 138
DE-A- 3 940 309         DE-A- 4 111 828

**Beschreibung**

Die Erfindung betrifft eine leicht zerstörbare Verankerungspatrone zur Befestigung eines Befestigungselementes in einem Bohrloch.

Die Verwendung von Reaktivharzmassen auf der Basis von ungesättigten Polyesterharzen, Vinylesterharzen oder Acrylharzen als Klebe- und Haftmittel für die chemische Befestigungstechnik ist seit langem bekannt (DE-OS 39 40 309, DE-OS 39 40 138, DE-OS 36 38 750). Es handelt sich dabei um Zweikomponentensysteme, wobei eine Komponente das vorbeschleunigte Reaktionsharz und die andere Komponente den Härter enthält. Andere übliche Bestandteile wie Füllstoffe, Stabilisatoren, Beschleuniger, Thixotropiermittel, reaktive Verdünner, Inhibitoren können in der einen und/oder der anderen Komponente enthalten sein.

Obwohl derartige Verankerungssysteme seit mehreren Jahren in der Befestigungstechnik angewendet werden, weisen sie jedoch einige Nachteile auf. Diese Nachteile bestehen in der ungleichmäßigen Aushärtung der Komponente. Die Härterteilchen wirken wie Keime, von denen die Aushärtungsreaktion ausgeht. Der damit unvermeidlich verbundene Konzentrationsgradient führt zu Fehlstellen und Spannungen im ausgehärteten Harzkörper.

Ein weiterer negativer Aspekt des Standes der Technik besteht darin, daß durch den üblichen Setzvorgang mit einer Bohrmaschine die Durchmischung der Komponenten beeinträchtigt wird, was durch erhöhten Einsatz von Härter, Phlegmatisierungsmitteln und Reaktionsverdünner ausgeglichen werden muß.

Durch fehlende Durchmischung am Anfang des Setzvorgangs tritt das überschüssige Harz aus dem Bohrloch aus. Dadurch wird die Befestigungsstelle verschmutzt.

Ausgehend von diesem Stand der Technik liegt der Erfindung die Aufgabe zugrunde, eine Verankerungspatrone zu schaffen, die einen homogenen Härtungsablauf der Komponenten sichert, sowie den Verbrauch an Härter, bezogen auf die gesamte Hartmenge, verringert.

Erfindungsgemäß wird diese Aufgabe durch die kennzeichnenden Merkmale des Anspruches 1 gelöst.

Durch den Einsatz der Härterkomponente, die aus einem unbeschleunigten, radikalisch aushärtenden Harz, in dem 1,0 bis 10 Gew.% bezogen auf den Gesamtharzgehalt der Patrone Härter aufgelöst ist, wobei der Härter bis 50 Gew.% von Peroxid enthält, wird ein homogener Härtungsablauf der Komponenten nach dem Zerstören der Patrone gesichert.

Die Vorteile der homogen aushärtenden Verbundpatrone, wie geringerer Härterverbrauch und gleichmäßiges Aushärten, werden durch das Vorliegen zweier mischbarer, flüssiger Komponenten erreicht.

Als radikalisch aushärtendes Harz können ungesättigte Polyesterharze, Vinylesterharze, Acrylharze oder auch andere radikalisch aushärtbare Monomere und Reaktivverdünner/Polymer-Kombinationen verwendet werden.

In beiden Kammern kann das gleiche Harz oder auch verschiedene Harze verwendet werden, z.B. Vinylesterharz mit Polyesterharz oder Vinylesterharz mit Acrylharz.

Die Untersuchungen haben ergeben, daß besonders gute Ergebnisse erreicht wurden, wenn das in der Härterkomponente enthaltene Peroxid erst oberhalb von ca. 50°C thermisch polymerisationsauslösende Spaltprodukte, anders benannt Radikale, bildet. Zur Anwendung können kommen z.B. Peroxide aus den Gruppen der Ketonperoxide, Alkylperester oder Diacylperoxide, insbesondere Dibenzoylperoxid, prinzipiell aber alle zur Kalthärtung geeigneten Inhibitoren.

Um die Lagerfähigkeit zu verbessern, können Inhibitoren wie z.B. 4-tert-Butylbrenz-catechin, 4-Methoxyphenol, p-Benzochinon zugegeben werden.

Zur Verankerung eines Befestigungselementes im Befestigungsgrund wird so verfahren, daß in an sich bekannter Weise eine zerstörbare Mehrkammerpatrone, die die Komponenten gemäß der Erfindung enthält, in ein Bohrloch im Befestigungsgrund eingebracht wird.

Danach wird durch Eintreiben des Befestigungselementes z. B. einer Ankerstange mittels Schlagbohrmaschine, Bohrmaschine oder einfach durch Einschlagen mit Hammer, die Patrone zerstört.

Die Komponenten werden vermischt und die Aushärtungsreaktion in Gang gesetzt. Die gute Mischungscharakteristik ermöglicht auch die Schlagmontage mit hohen Haltewerten. Der beim Setzen aus dem Bohrloch austretende Überschuß von Mörtelmasse ist völlig ausgehärtet.

Dadurch wird die Belastung der Umwelt, die mit der Emission der Monomere z.B. Styrol verursacht wird, vermieden.

Die folgenden Beispiele zeigen die Ausführung der vorliegenden Erfindung und verdeutlichen die gegenüber dem Stand der Technik verbesserten Eigenschaften.

Beispiel 1

| | |
|---|---:|
| Vinylesterepoxidharz | 61,75 g |
| Styrol | 33,25 g |
| Dibenzoylperoxid | 2,5 g |
| Phlegmatisierungsmittel | 2,5 g |
| | 100,0 g |

Beispiel 2

| | |
|---|---:|
| Vinylesterepoxidharz | 55,1 g |
| Styrol (41 %) | 36,9 g |
| Dibenzoylperoxid | 5,0 g |
| Phlegmatisierungsmittel | 5,0 g |
| | 100,0 g |

## Beispiel 3

| Vinylesterepoxidharz | 64,8 g |
|---|---|
| Styrol | 34,9 g |
| Dimethyl-p-toluidin | 0,3 g |
| | 100,0 g |

## Beispiel 4

| Vinylesterepoxidharz | 58,82 g |
|---|---|
| Styrol | 40,88 g |
| Dimethyl-p-toluidin | 0,3 g |
| | 100,0 g |

## Beispiel 5

Patrone der Größe M12
0,77 Gew.% BPO/auf Gesamtharzgehalt

Innenpatrone

| Harz nach Beispiel 3 | 2,76g |
|---|---|
| Quarzsand (Korngröße 1,0 - 1,8 mm) | 6,60g |

Außenpatrone

| Harz nach Beispiel 1 | 1.24g |
|---|---|

Montage: Schlagdrehmontage
Aushärtezeit: 0,5 h
Beton: B45
Haltekraft: 35,5 kN
Verbundfestigkeit: 9,5 N/mm$^2$
Versagen: Verbund
Überschuß: vollständig ausgehärtet nach 15 min.

## Beispiel 6

Patrone der Größe M12
2,5 Gew.% BPO/auf Gesamtharzgehalt

Innenpatrone

| Harz nach Beispiel 4 | 2,0g |
|---|---|
| Quarzsand (Korngröße 1,0 - 1,8 mm) | 8,0 g |

Außenpatrone

| Harz nach Beispiel 2 | 2,0 g |
|---|---|

Montage: Schlagdrehmontage
Aushärtezeit: 0,5 h
Beton: B45
Haltekraft: 45,2 kN
Verbundfestigkeit: 12,1 N/mm$^2$
Versagen: Stahl
Überschuß: vollständig ausgehärtet nach 7 min.

## Beispiel 7

Patrone der Größe 12
1,5 Gew.% BPO/auf Gesamtharzgehalt

Innenpatrone

| Harz nach Beispiel 4 | 2,8 g |
|---|---|
| Quarzsand (Korngröße 1,0 - 1,8 mm) | 6,0 g |

Außenpatrone

Harz nach Beispiel 2
Montage: Schlagmontage
Aushärtezeit: 120 min.
Beton: B45
Haltekraft: 41,5 kN
Verbundfestigkeit: 9,3 N/mm$^2$
Versagen: Stahl
Überschuß: vollständig ausgehärtet nach 10 min.

## Beispiel 8

Patrone wie in Beispiel 6

Montage: Schlagmontage
Aushärtezeit: 120 min.
Beton: B45
Haltekraft: 50,5 kN
Verbundfestigkeit: 11,3 N/mm$^2$
Versagen: Stahl
Überschuß: vollständig ausgehärtet nach 7 min.

## Beispiel 9

Patrone wie in Beispiel 5

Montage: Schlagmontage
Aushärtezeit: 120 min.
Haltekraft: 40,5 kN
Verbundfestigkeit: 9,1 N/mm$^2$
Versagen: Stahl
Überschuß: vollständig ausgehärtet nach 14 min.

**Patentansprüche**

1. Verankerungspatrone mit mindestens zwei Kammern zur Befestigung eines Befestigungselements in einem Bohrloch, **dadurch gekennzeichnet**, daß die eine Kammer eine Härterkomponente, die aus einem unbeschleunigten, radikalisch aushärtenden Harz, in dem eine bestimmte Menge an Härter aufgelöst ist und die andere Kammer ein Harz, das mit Beschleuniger vermischt ist, enthält.

2. Verankerungspatrone nach Anspruch 1, **dadurch gekennzeichnet**, daß der in dem unbeschleunigten Harz aufgelöste Härteranteil 1,0 bis 10% bezogen auf den Gesamtharzgehalt beträgt, wobei der Härter bis 50 Gew.% Peroxid enthält.

3. Verankerungspatrone nach Anspruch 2, **dadurch gekennzeichnet**, daß als Härterkomponente Peroxide aus den Gruppen der Ketonperoxide, Alkylperester oder Diacylperoxide, insbesondere Dibenzoylperoxide, verwendet wird.

4. Verankerungspatrone nach Anspruch 3, **dadurch gekennzeichnet**, daß das in der Härterkomponente enthaltene Peroxid oberhalb von 50°C thermisch polymerisationsauslösende Radikale bildet.

## Claims

1. Anchoring cartridge having at least two chambers for fastening a fastening element in a drilled hole, characterised in that one chamber contains a hardener component that comprises an unaccelerated radical-curing resin in which a specific amount of hardener is dissolved and the other chamber contains a resin that is mixed with an accelerator.

2. Anchoring cartridge according to claim 1, characterised in that the proportion of hardener dissolved in the unaccelerated resin is from 1.0 % to 10 %, based on the total resin content, the hardener containing up to 50 % by weight of peroxide.

3. Anchoring cartridge according to claim 2, characterised in that peroxides from the groups of the ketone peroxides, alkyl peroxides or diacyl peroxides, especially dibenzoyl peroxides, are used as the hardener component.

4. Anchoring cartridge according to claim 3, characterised in that, above 50°C, the peroxide contained in the hardener component forms thermally polymerisation-inducing radicals.

## Revendications

1. Cartouche d'ancrage comportant au moins deux compartiments, pour la fixation d'un élément de fixation dans un trou percé ou foré, cartouche caractérisée en ce qu'un compartiment contient un constituant durcisseur formé d'une résine non accélérée, durcissant par voie radicalaire et dans laquelle une quantité déterminée de durcisseur est dissoute, et l'autre compartiment contient une résine qui est mélangée à un accélérateur.

2. Cartouche d'ancrage selon la revendication 1, caractérisée en ce que la proportion de durcisseur dissoute dans la résine non accélérée représente 1,0% à 10%, par rapport à la teneur totale en résine, le durcisseur contenant jusqu'à 50% en poids d'un peroxyde.

3. Cartouche d'ancrage selon la revendication 2, caractérisée en ce que l'on utilise comme constituant durcisseur des peroxydes choisis dans les ensembles formés par des peroxydes de cétone, des peresters alkyliques ou des peroxydes de diacyle, notamment des peroxydes de dibenzoyle.

4. Cartouche d'ancrage selon la revendication 3, caractérisée en ce que le peroxyde contenu dans le constituant durcisseur forme des radicaux capables de déclencher, à une température supérieure à 50°C, une polymérisation par voie thermique.